# FASCICULE DE BREVET EUROPEEN

(11) **EP 1 037 156 B1**
(45) Date de publication et mention de la délivrance du brevet: **27.07.2005**
(21) Numéro de dépôt: 00400707.6
(22) Date de dépôt: 15.03.2000
(51) Int. Cl.: G06F 17/60, G07C 5/00, G08G 1/0969

(54) **Dispositif pour la gestion de l'activité d'une équipe de représentants commerciaux itinérants**
Anordnung zur Steuerung der Tätigkeiten einer Gruppe von Handelsreisenden
Apparatus for controlling the activities of a team of commercial travellers

(30) Priorité: 17.03.1999 FR 9903318
(43) Date de publication de la demande: 20.09.2000
(73) Titulaire: Bouchy Holding, 92800 Puteaux (FR)
(72) Inventeur: Bouchy, Claude, 75116 Paris (FR)
(74) Mandataire: Colas, Jean-Pierre

(56) Documents cités:
- EP-A- 0 288 068
- DE-A- 4 423 328
- US-A- 4 345 147
- US-A- 4 853 852
- US-A- 5 337 253
- WHITE: "On-Road, On-Time, and On-Line" BYTE, vol. 20, no. 4, avril 1995 (1995-04), pages 60-66, XP000501817 Peterborough, NH, US

## Description

La présente invention est relative à un dispositif pour la gestion de l'activité d'une équipe de représentants commerciaux itinérants et, plus particulièrement, à un tel dispositif adapté à la supervision d'une équipe de visiteurs médicaux.

On sait que les visiteurs médicaux ont pour fonction la promotion de spécialités pharmaceutiques auprès des médecins appelés à les prescrire. Du fait de la dispersion de ceux-ci, dans la plupart des pays les visiteurs se rendent auprès des médecins à l'aide d'un véhicule automobile, en suivant un programme de visites établi à l'aide de procédés de planification classiques définissant notamment le secteur géographique couvert par un visiteur particulier et les médecins à visiter dans ce secteur. Régulièrement ces visiteurs opèrent en compagnie de leur superviseur. Des rapports périodiques, écrits ou oraux, sont établis par les visiteurs pour communiquer leurs observations sur les réactions des médecins visités aux présentations de produits qui leur ont été faites.

L'exploitation de ces rapports est évidemment d'une importance primordiale pour l'élaboration et l'adaptation des stratégies commerciales des laboratoires pharmaceutiques. C'est pourquoi ceux-ci consentent à l'investissement très important que constitue l'emploi d'une équipe de visiteurs médicaux. Or, l'organisation et le suivi, selon les méthodes actuelles, de l'activité des visiteurs médicaux ne rentabilisent pas au mieux le coût de cet investissement. En effet, les procédés de planification classiques des visites actuellement utilisés, aussi bien par les visiteurs médicaux que par leurs superviseurs, ne permettent pas de suivre, en temps réel, cette activité et donc de contrôler et de piloter au mieux le programme des visites, d'acquérir au plus vite les rapports de visite et, plus généralement, de superviser étroitement l'exécution de cette activité de manière à lui assurer une efficacité maximale.

Le document US A 4 853 852 décrit un dispositif pour la gestion de l'activité de représentant itinérants, dans lequel chaque vendeur est muni d'un micro-ordinateur portable sur lequel il enregistre des informations concernant les résultats de ses visites et transmet, à la fin de sa journée, par l'intermédiaire d'un réseau téléphonique filaire, ces informations à une unité centrale. Celle-ci émet automatiquement des courriers à destination des clients et envoie en retour au représentant un planning sous forme de carte indiquant les clients visités ou à visiter. Ce dispositif n'est pas adapté à la gestion en temps réel de l'activité de représentants itinérants.

Le document DE 44 23 328 décrit un dispositif comportant des moyens pour surveiller et optimiser les déplacements d'une flotte de véhicules à partir d'une unité centrale recevant les informations de position des véhicules de la flotte. L'information de position du véhicule est utilisée pour la constitution de cartes géographiques permettant la visualisation simultanée d'une pluralité de véhicules en circulation. Ce dispositif permet en outre de transmettre par radio des ordres au conducteur du véhicule. Toutefois il ne comporte pas de moyens permettant la gestion en temps réel de l'activité de représentants itinérants.

La présente invention a précisément pour but de fournir un dispositif de gestion de l'activité d'une équipe de représentants commerciaux tels que des visiteurs médicaux par exemple, qui ne présente pas les inconvénients mentionnés ci-dessus et qui, plus particulièrement, permette d'assurer en temps réel la gestion de cette activité de manière, notamment, à en affiner son organisation, surveiller étroitement son exécution et accélérer la production des rapports de visite.

On atteint ce but de l'invention, ainsi que d'autres qui apparaîtront à la lecture de la description qui va suivre, avec un dispositif selon la revendication 1.

Suivant d'autres caractéristiques du dispositif selon l'invention, les moyens de communication bidirectionnels comprennent des moyens de téléphonie mobile. Les moyens de relevé de la position du véhicule sont constitués par un récepteur d'informations venues d'un système de positionnement par satellite dans un repère terrestre. L'unité centrale comprend des moyens d'enregistrement de la position du véhicule et d'une identification du représentant auquel ledit véhicule est affecté et des moyens logiciels de recherche de médecins à visiter dans un périmètre géographique prédéterminé, fonction de ladite position du véhicule ou d'une autre position indiquée par ledit représentant.

D'autres caractéristiques et avantages de la présente invention apparaîtront à la lecture de la description qui va suivre et à l'examen du dessin annexé dans lequel :
- la figure 1 est un schéma d'ensemble du dispositif suivant l'invention et des moyens de communication bidirectionnels dont ce dispositif fait usage,
- la figure 2 est un schéma de la structure du module électronique équipant un véhicule utilisé par un représentant commercial dont l'activité est supervisée par le dispositif suivant l'invention,
- la figure 3 est un schéma fonctionnel du dispositif suivant l'invention, et
- les figures 4 à 7 sont des organigrammes de processus exécutés par le dispositif suivant l'invention.

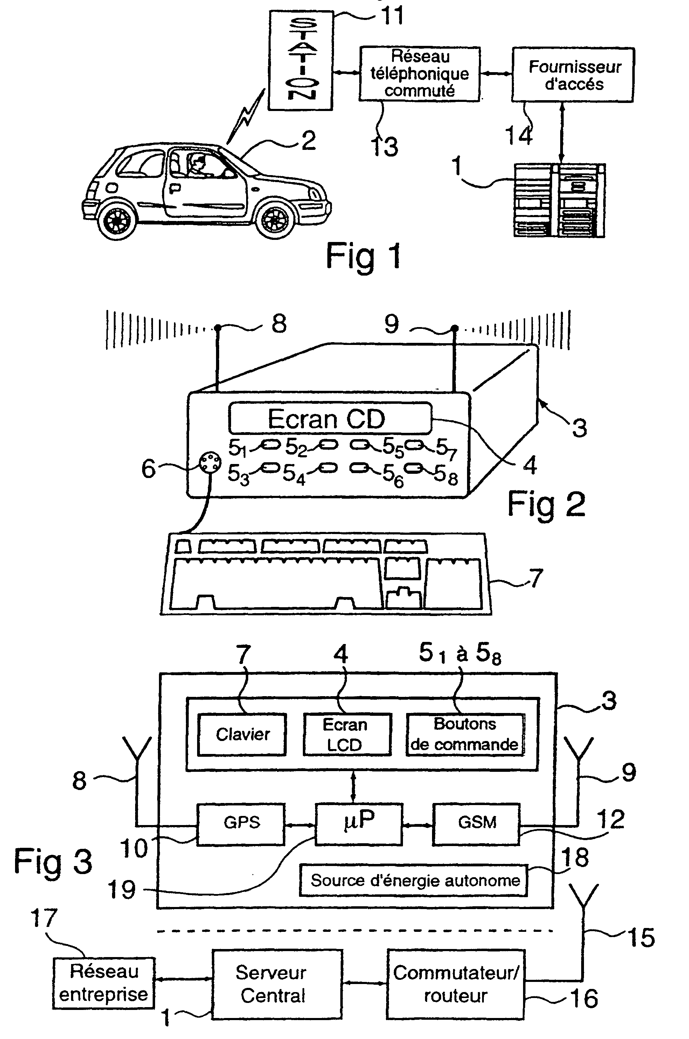

On se réfère aux figures 1 à 3 du dessin annexé pour décrire la structure du dispositif suivant l'invention. Le coeur de celui-ci est constitué par une unité centrale de traitement de données 1 physiquement localisée, par exemple, dans les locaux d'une entreprise exploitant le dispositif suivant l'invention. A titre d'exemple illustratif et non limitatif seulement, on décrira la présente invention dans son application à la supervision d'une équipe de visiteurs médicaux employés par un laboratoire pharmaceutique.

Chaque représentant utilise un véhicule automobile 2 dans lequel, suivant la présente invention, un module électronique spécifique 3 (voir figure 2) est embarqué. Celui-ci prend la forme d'un boîtier comportant, en façade, un écran 4 d'affichage d'informations, à cristaux liquides par exemple, des boutons de commande 5₁ à 5₆ et une prise 6 de raccordement à un clavier 7.

Du boîtier débordent deux antennes 8 et 9. L'antenne 8 fait partie de moyens 10 (voir figure 3) prévus dans le module électronique 3 pour relever la position du véhicule 2. Suivant la présente invention, ce moyen prend avantageusement la forme d'un récepteur d'informations venues d'un système de positionnement par satellite, tel que la constellation de satellites dite GPS.

L'antenne 9 fait partie de moyens de communication d'informations bidirectionnels sans fil entre le module 3 et l'unité centrale 1, ou "serveur" central. Comme représenté à la figure 1 à titre d'exemple illustratif et non limitatif seulement, ces moyens peuvent comprendre un système de téléphonie mobile tel que le système GSM et comprendre alors une station 11 propre à communiquer, à travers l'antenne 9, avec un émetteur/récepteur 12 (voir figure 3) présent dans le module 3. La station 11 fait transiter ainsi, dans les deux sens, des informations entre le module 3 et le serveur 1, par l'intermédiaire du réseau téléphonique commuté 13 et d'un fournisseur d'accès 14 à un réseau de communication tel que le réseau Internet par exemple. Avantageusement, la communication ainsi établie comporte une ligne "données" pour un but qui apparaîtra plus loin. Suivant l'invention, cette communication permet de transmettre au serveur central 1 la position du véhicule 2 depuis le récepteur 10, ainsi qu'un signal d'identification du visiteur médical auquel ce véhicule est affecté, également pour un but qui sera explicité plus loin.

Comme représenté à la figure 3, dans les locaux de l'entreprise, les informations échangées par le serveur 1 avec le module électronique 3 transitent à travers une antenne 15 et un commutateur/routeur 16. Le serveur central 1 peut être lui-même connecté au réseau informatique 17 de l'entreprise.

On revient à la figure 2 pour décrire en plus de détails les fonctions des boutons de commande 5₁ à 5₈. Le bouton 5₁ est un interrupteur général, du type marche/arrêt, de l'alimentation électrique du module, assurée de préférence par une alimentation autonome 18 (voir figure 3) rechargée en permanence par la batterie du véhicule, par exemple. Le bouton 5₂ sert à lancer une "recherche de médecins" à visiter, le bouton 5₃ sert à lancer l'édition d'un "rapport de visite", le bouton 5₄ sert à signaler la fin de cette édition. Les boutons 5₅ et 5₆ activent des fonctions classiques de validation et d'annulation respectivement, de la transmission de messages entre le module 3 et le serveur central 1. Le bouton 5₇ permet au superviseur du visiteur de valider ses journées de travail, de faire un certain nombre d'observations et de laisser des instructions après son passage. Le bouton 5₈ permet d'entrer en mémoire les prises de rendez-vous pour les jours à venir.

Une unité centrale 19 de commande, un microprocesseur par exemple, gère le fonctionnement des différents composants du module 3, comme représenté à la figure 3.

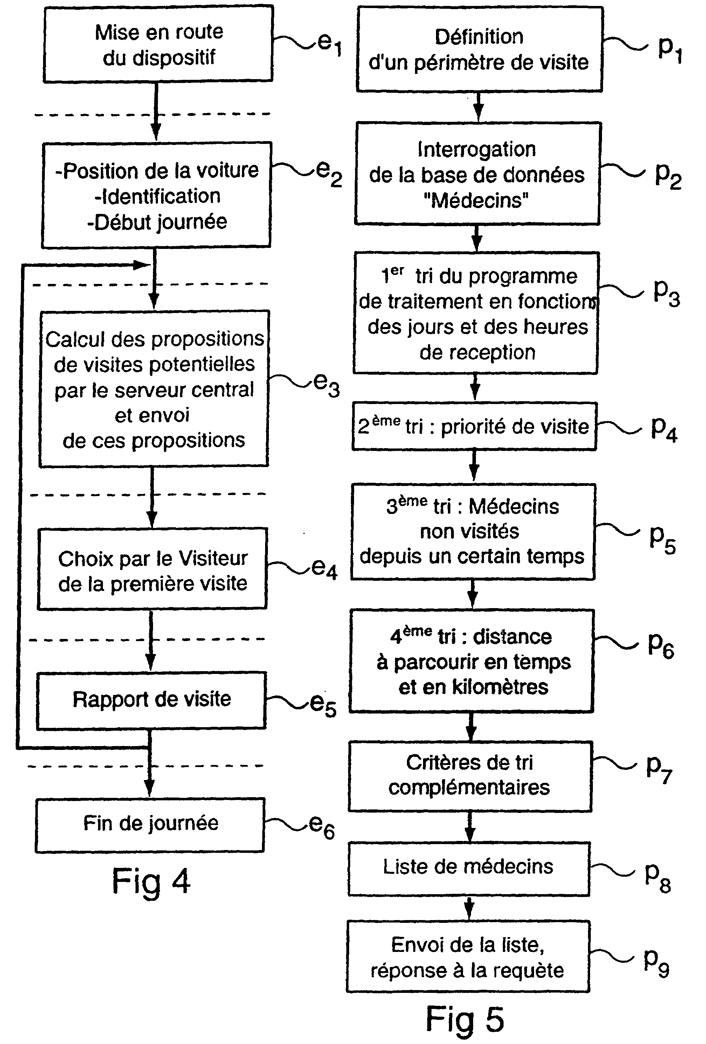

On se réfère maintenant à l'organigramme de la figure 4 pour décrire l'organisation et la supervision d'une journée de travail, par exemple, d'un visiteur médical, au moyen du dispositif suivant l'invention.

A l'étape e₁, le visiteur appuie sur un bouton 5₁ pour mettre en service le module 3. A l'étape e₂, le module 3 envoie au serveur 1 la position de la voiture, reçue du système GPS par le récepteur 10, un numéro d'identification du visiteur et un signal de début de journée de visites.

Le serveur 1 peut être constitué par un ordinateur comprenant un système d'exploitation propre à exécuter une fonction "serveur". La liaison du serveur avec le module 2 peut se faire avantageusement à travers le réseau Internet, comme on l'a vu plus haut, ou bien à travers un réseau privé. Avantageusement, les communications entre le réseau de téléphonie mobile et le serveur peuvent utiliser les protocoles HTTP et FTP. C'est ainsi que le module 3 peut envoyer au serveur des requêtes en protocole HTTP, le serveur répondant suivant le même protocole.

Les requêtes sont reçues par le serveur dans un module de réception de requêtes constitué par un programme écrit par exemple en HTML et traité par un programme de traitement pouvant être écrit dans divers langages informatiques (PERL, JAVA, VISUAL BASIC, etc...) convenables. Pour ce traitement, ce programme fait appel à des données contenues dans une base de données connectée au serveur 1.

Le visiteur lance une "recherche de médecins" à visiter en appuyant sur le bouton 5₂ du module 3. Cette requête est reçue par ledit module de réception et traitée par le programme de traitement (étape e₃) qui élabore une liste de médecins à visiter à l'aide d'un programme dont l'organigramme est représenté à la figure 5. Le module de réception des requêtes et le programme de traitement constituent ainsi des moyens d'aide à l'établissement du programme de visites du visiteur médical.

Pour ce faire, au pas p₁ de cet organigramme, on définit un périmètre géographique de visites, de 10, 20 ou 30 km par exemple, autour de la position relevée du véhicule du visiteur médical, ou d'une autre position indiquée par le visiteur à l'aide du clavier 7. La base de données mentionnée plus haut contient un répertoire d'adresses de médecins susceptibles d'être visités, dans un secteur géographique plus étendu que celui défini par ce périmètre.

Au pas p₂, cette base est interrogée pour fournir une liste de médecins localisés à l'intérieur du périmètre choisi. Cette liste est ensuite filtrée à l'aide de plusieurs critères de tri, aux pas p₃ à p₇.

Au pas p₃, on trie la liste en fonction des jours et heures de réception des visiteurs médicaux par les médecins de manière à éliminer ceux qui ne reçoivent pas le jour de l'établissement de la liste des médecins à visiter ce jour.

Au pas p₄, on trie la liste réduite ainsi obtenue en fonction de priorités de visite de certains médecins, établies par le laboratoire, de manière à retenir les médecins à visiter en priorité.

Au pas p₅, on examine la liste de médecins ainsi obtenue au regard du temps écoulé depuis la dernière visite de ce médecin, soit par le visiteur médical en cause, soit par l'un de ses collègues, de manière à favoriser les médecins non visités depuis plus longtemps que les autres.

Au pas p₆, on examine la liste réduite ainsi obtenues au regard de la distance à parcourir par le visiteur médical pour visiter les médecins sélectionnés dans la journée, de manière à réduire éventuellement celle-ci si la distance calculée est trop élevée.

Au pas p₈, on peut encore réduire la liste en fonction de critères de tri complémentaires, fixés par le laboratoire (par exemple : rendez-vous, médecins ayant une expérimentation en cours, médecins ayant demandé une remise spéciale d'échantillons, etc...).

Au pas p₉, la liste de médecins est transmise par le serveur 1 au module 3, où elle s'affiche sur l'écran 4, par l'intermédiaire d'informations circulant sur la ligne "données" précitée, par exemple.

A ce niveau, le visiteur médical peut encore, à l'aide du clavier 7, forcer l'entrée dans la liste d'un médecin n'y figurant pas, de manière que le serveur recalcule la liste modifiée ainsi établie, en fonction des critères explicités ci-dessus en liaison avec la description des pas p₃ à p₈.

Le visiteur médical est alors en possession de la liste de médecins à visiter. Il passe alors à l'étape e₄ de l'organigramme de la figure 4 où il choisit le premier médecin à visiter, dans la liste obtenue comme décrit ci-dessus, éventuellement modifiée de sa propre initiative.

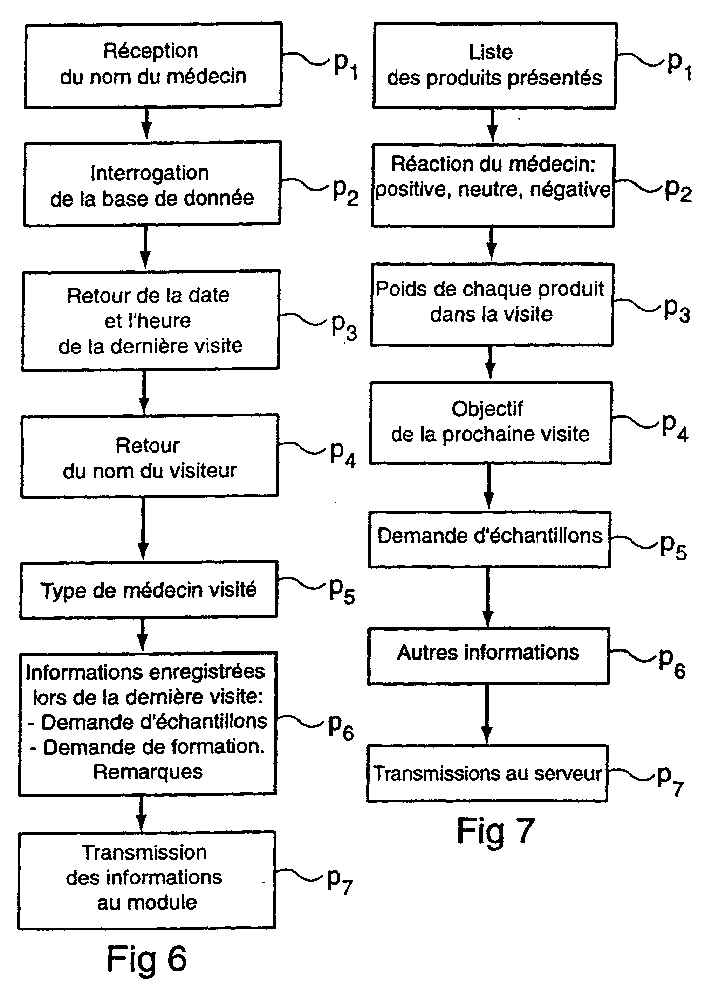

Ayant choisi le premier médecin à visiter, le visiteur médical a la possibilité de rechercher, dans la base de données, des informations sur ce médecin qui sont stockées dans cette base, en activant un programme dont l'organigramme est représenté à la figure 6 et décrit ci-dessous.

A la réception du nom du médecin (étape p₁), le programme de traitement interroge la base de données (étape p₂) qui délivre en retour la date et l'heure de la dernière visite (p₃), le nom du dernier visiteur médical reçu par ce médecin (p₄), le type de ce médecin (généraliste, spécialiste, praticien d'essais cliniques, ....) et autres informations de marketing (p₅), les informations enregistrées lors de la dernière visite (demande d'échantillons, demandes de formation, remarques personnelles etc...), toutes ces informations étant finalement affichées sur l'écran 4 du module 3 pour renseigner le visiteur médical sur les caractéristiques du médecin qu'il va visiter.

Le visiteur médical se rend alors auprès du médecin en question et développe alors classiquement ses présentations de produits et son dialogue avec le médecin.

A l'issue de cette rencontre, le dispositif suivant la présente invention permet avantageusement au visiteur médical de rendre immédiatement compte au laboratoire de des résultats de sa visite (étape e₅, figure 4). Pour ce faire, il lance l'édition d'un rapport de visite en appuyant sur le bouton 5₃ "Rapport de visite" du module 3. Le serveur émet alors un questionnaire conformé selon l'organigramme de la figure 7, pour aider le visiteur médical à rendre compte de sa visite avec efficacité.

Comme illustré à la figure 7, le visiteur médical entre alors, à l'aide du clavier 7, ses réponses concernant la liste des produits présentés (étape p₁), la réaction du médecin (étape p₄) qui peut être positive, neutre ou négative, le "poids" ou importance donnée à chaque produit dans la visite (p₂), d'éventuelles demandes d'échantillons de produits (p₅), et toute autre information éventuelle (p₆). Le visiteur médical signale la fin du rapport de visite en appuyant sur le bouton 5₄ et valide l'émission de celui-ci vers le serveur 1, via les moyens (11,13,14) décrits ci-dessus, en appuyant sur le bouton 5₅.

Le processus décrit ci-dessus se répète (voir figure 4) jusqu'au dernier médecin de la liste fournie pour la journée (étape 6). Le serveur central 1 constitue ainsi, avec les moyens de communication décrits ci-dessus, des moyens de collection de rapports de visite, les informations contenues dans ceux-ci étant ensuite traitées dans le serveur central.

Il apparaît maintenant que l'invention permet bien d'atteindre le but annoncé, à savoir assurer en temps réel la gestion de l'activité de chacun des membres d'une équipe de visiteurs médicaux de manière à en accroître l'efficacité par une planification pertinente, une surveillance étroite, une collection immédiate des rapports de visite et un relevé de certains paramètres permettant de mesurer cette activité (kilomètres parcourus, heures effectives de travail, nombre de visites effectuées journellement, frais encourus, etc...). Les rapports de visite peuvent être exploités ainsi plus rapidement, par des moyens informatiques, ce qui permet de rentabiliser au mieux l'activité des visiteurs médicaux.

Bien entendu, l'invention n'est pas limitée au mode de réalisation décrit et représenté, qui n'a été donné qu'à titre d'exemple. C'est ainsi que le dispositif suivant l'invention pourrait être adapté également à la supervision du travail des délégués régionaux, responsables d'une équipe de visiteurs médicaux. Plus généralement encore, la présente invention est clairement applicable à la supervision de l'activité de représentants commerciaux autres que les visiteurs médicaux et opérant dans des secteurs d'activité autres que le secteur pharmaceutique.

De même, l'invention n'est pas limitée à la forme matérielle particulière donnée au module électronique décrit ci-dessus. Elle s'étend, au contraire, à un module prenant, par exemple, la forme d'un ordinateur personnel équipé d'une carte électronique "GSM", d'une carte "GPS" et de boutons "logiciels" exécutant les fonctions des boutons 5₁ à 5₈ décrits ci-dessus.

## Revendications

1. Dispositif pour la gestion de l'activité d'une équipe de visiteurs médicaux, **caractérisé en ce qu'**il comprend :
a) une unité centrale (1) de traitement de données comprenant a₁) des moyens d'aide à l'établissement d'un programme de visites pour chacun des visiteurs médicaux et a₂) des moyens de collection et de traitement des rapports de visite établis par ceux-ci,
b) un module électronique (3) destiné à être embarqué dans chacun des véhicules (2) utilisés par lesdits visiteurs médicaux et comprenant b₁) des moyens (8,10) pour relever la position du véhicule constitués par un récepteur (8,10) recevant des informations d'un système de positionnement par satellite dans un repère terrestre et b₂) des moyens (7) pour enregistrer lesdits rapports de visite, et
c) des moyens de communication d'informations bidirectionnels (11,13,14) par téléphonie mobile entre ladite unité centrale (1) et ledit module électronique (3), pour l'établissement desdits programmes de visite, la saisie de ladite position du véhicule, la collection de rapports de visite par ladite unité centrale (1) et la transmission à l'unité centrale (1) de la position du véhicule et d'une identification du visiteur médical,
lesdits programmes de visite étant établis à partir d'une liste de visites à effectuer dans un périmètre géographique prédéterminé qui est fonction de la position du véhicule relevée par lesdits moyens (8,10) pour relever la position du véhicule ou d'une autre position indiquée par ledit visiteur médical.

2. Dispositif conforme à la revendication 1, **caractérisé en ce que** lesdits moyens de communication d'informations bidirectionnels par téléphonie mobile sont constitués par le système de téléphonie mobile GSM.

3. Dispositif conforme à la revendication 1 ou 2, **caractérisé en ce que** ledit système de positionnement par satellite est constitué par la constellation de satellites GPS.

4. Dispositif conforme à l'une quelconque des revendications 1 à 3, **caractérisé en ce que** ledit module électronique (3) comprend un écran (4) d'affichage d'informations reçues de l'unité centrale (1), ou enregistrées au moyen d'un clavier (7) pour envoi à ladite unité centrale (1).

5. Dispositif conforme à la revendication 4, **caractérisé en ce que** ledit module électronique (3) comprend une pluralité de boutons de commande (5ᵢ) comprenant un bouton (5₂)permettant d'activer le lancement d'un programme de recherche de médecins à visiter.

6. Dispositif conforme à la revendication 5, **caractérisé en ce que** ledit module comprend en outre un bouton (5₃) permettant d'activer le lancement de l'édition d'un rapport de visite et un bouton (5₄) permettant de commander la fin de cette édition.

7. Dispositif conforme à l'une quelconque des revendications 1 à 6, **caractérisé en ce que** l'unité centrale (1) comprend des moyens d'enregistrement de la position du véhicule et d'une identification du visiteur médical auquel ledit véhicule est affecté, et des moyens logiciels de recherche de médecins à visiter dans un périmètre géographique prédéterminé fonction de ladite position du véhicule, ou d'une autre position indiquée par ledit visiteur médical.

8. Dispositif conforme à la revendication 7, **caractérisé en ce que** lesdits moyens logiciels de recherche de médecins à visiter exécutent en outre des fonctions de tri desdits médecins à visiter en fonction d'une pluralité de critères choisis dans le groupe comprenant :
- les jours et heures de réception des visiteurs médicaux par le médecin,
- la priorité de visite établie pour le médecin,
- le temps écoulé depuis la dernière visite du médecin,
- la distance à parcourir par le visiteur médical pour visiter le médecin,
- l'existence d'un rendez-vous pris avec médecin,
- l'existence d'une expérimentation en cours chez le médecin,
- l'existence d'une demande de remise d'échantillon du médecin.

9. Dispositif conforme à la revendication 7 ou 8, **caractérisé en ce que** lesdits moyens logiciels comprennent en outre des moyens de stockage et de transmission d'informations relatives à un médecin prédéterminé à visiter.

10. Dispositif conforme à l'une quelconque des revendications 7 à 9, **caractérisé en ce que** le module électronique comprend des moyens (5₃,5₄,7), pour éditer et transmettre un rapport de visite, immédiatement après la fin de ladite visite.

11. Dispositif conforme à la revendication 10,
**caractérisé en ce que** lesdits moyens pour éditer et transmettre un rapport de visite comprennent en outre des moyens logiciels d'aide à l'édition dudit rapport, contenus dans ladite unité centrale (1).

12. Module électronique formant partie du dispositif conforme à l'une quelconque des revendication 1 à 11.

## Claims

1. Device for managing the activity of a team of pharmaceutical representatives, **characterized in that** it comprises:
a) a central data processing unit (1) comprising a₁) means for assisting with the drawing up of a program of visits for each of the pharmaceutical representatives and a₂) means for collecting and processing visit reports drawn up by the latter,
b) an electronic module (3) adapted to be installed in each of the vehicles (2) used by said pharmaceutical representatives and comprising b₁) means (8, 10) for identifying the position of the vehicle consisting of a receiver (8, 10) for receiving information in a terrestrial frame of reference from a satellite positioning system and b₂) means (7) for storing said visit reports, and
c) means (11, 13, 14) for bidirectional communication of information by mobile telephone between said central unit (1) and said electronic module (3) for drawing up said programs of visits, entering said position of the vehicle, collection of visit reports by said central unit (1) and transmission to the central unit (1) of the position of the vehicle and of the identity of the pharmaceutical representative,
said programs of visits being based on a list of visits to be effected in a predetermined geographical perimeter that is a function of the position of the vehicle identified by said means (8, 10) for identifying the position of the vehicle or another position indicated by said pharmaceutical representative.

2. Device according to claim 1, **characterized in that** said means for bidirectional communication of information by mobile telephone consists of the GSM mobile telephone system.

3. Device according to claim 1 or claim 2, **characterized in that** said satellite positioning system is the GPS satellite constellation.

4. Device according to any one of claims 1 to 3, **characterized in that** said electronic module (3) comprises a screen (4) for displaying information received from the central unit (1) or entered by means of a keypad (7) for sending to said central unit (1).

5. Device according to claim 4, **characterized in that** said electronic module (3) comprises a plurality of control buttons (5ᵢ) comprising a button (5₂) for activating the launching of a program for searching for doctors to be visited.

6. Device according to claim 5, **characterized in that** said module further comprises a button (5₃) for activating the launching of the production of a visit report and a button (5₄) for terminating the production of a visit report.

7. Device according to any one of claims 1 to 6, **characterized in that** the central unit (1) comprises means for storing the position of the vehicle and the identity of the pharmaceutical representative to whom said vehicle is assigned and software means for searching for doctors to be visited in a predetermined geographical perimeter as a function of said position of the vehicle or another position indicated by said pharmaceutical representative.

8. Device according to claim 7, **characterized in that** said software means for searching for doctors to be visited also execute functions of sorting said doctors to be visited as a function of a plurality of criteria chosen in the group comprising:
- the days and times the doctor receives pharmaceutical representatives,
- the visit priority established for the doctor,
- the time elapsed since the last visit to the doctor,
- the distance to be traveled by the pharmaceutical representative to visit the doctor,
- the existence of an appointment with the doctor,
- the existence of a trial in progress by the doctor,
- the existence of a request for samples from the doctor.

9. Device according to claim 7 or claim 8, **characterized in that** said software means further comprise means for storing and transmitting information relating to a predetermined doctor to be visited.

10. Device according to any one of claims 7 to 9, **characterized in that** the electronic module comprises means (5₃, 5₄, 7) for producing and transmitting a visit report immediately after the end of said visit.

11. Device according to claim 10, **characterized in that** said means for producing and transmitting a visit report further comprise software means, contained in said central unit (1), for assisting with the production of said report.

12. Electronic module forming part of the device according to any one of claims 1 to 11.

## Patentansprüche

1. Vorrichtung zum Verwalten der Aktivität einer Gruppe von Pharmaberatern, **dadurch gekennzeichnet, dass** sie Folgendes umfasst:
a) eine Zentraleinheit (1) zur Datenverarbeitung, umfassend a₁) Mittel zum Unterstützen des Erstellens eines Besuchsprogramms für jeden der Pharmaberater, und a₂) Mittel zum Sammeln und Verarbeiten der Besuchsberichte, die von diesen erstellt werden,
b) ein elektronisches Modul (3), das dazu bestimmt ist, in jedem der Fahrzeuge (2) mitgeführt zu werden, die von den Pharmaberatern verwendet werden und umfassend b₁) Mittel (8, 10) zum Messen der Position des Fahrzeugs bestehend aus einem Empfänger (8,10), der Informationen von einem Satellitenpositionierungssystem in einem Landstandort empfängt, und b₂) Mittel (7), um die Besuchsberichte aufzuzeichnen, und
c) Mittel zur Zweirichtungskommunikation (11, 13, 14) von Informationen per Mobiltelefonie zwischen der Zentraleinheit (1) und dem elektronischen Modul (3) zum Erstellen der Besuchsprogramme, zur Eingabe der Position des Fahrzeugs, zum Sammeln von Besuchsberichten durch die Zentraleinheit (1) und zum Übertragen der Position des Fahrzeugs und einer Identifikation des Pharmaberaters zur Zentraleinheit (1),
wobei die Besuchsprogramme ausgehend von einer Liste von Besuchen erstellt werden, die in einem vorausbestimmten geographischen Umkreis durchzuführen sind, der von der Position des Fahrzeugs abhängt, welche von den Mitteln (8, 10) gemessen wurde, um die Position des Fahrzeugs oder eine andere Position abzulesen, die von dem Pharmaberater angegeben wird.

2. Vorrichtung nach Anspruch 1, **dadurch gekennzeichnet, dass** die Mittel zur Zweirichtungskommunikation von Informationen per Mobiltelefonie aus dem GSM-Mobiltelefoniesystem bestehen.

3. Vorrichtung nach Anspruch 1 oder 2, **dadurch gekennzeichnet, dass** das Satellitenpositionierungssystem aus der Konstellation von GPS-Satelliten besteht.

4. Vorrichtung nach einem der Ansprüche 1 bis 3, **dadurch gekennzeichnet, dass** das elektronische Modul (3) ein Anzeigedisplay (4) für Informationen umfasst, die von der Zentraleinheit (1) empfangen werden oder mittels einer Tastatur (7) für das Senden an die Zentraleinheit (1) aufgezeichnet werden.

5. Vorrichtung nach Anspruch 4, **dadurch gekennzeichnet, dass** das elektronische Modul (3) eine Mehrzahl von Bedienknöpfen (5₁) umfasst, die einen Knopf (5₂) umfassen, der es erlaubt, das Starten eines Suchprogramms von Ärzten, die zu besuchen sind, zu aktivieren.

6. Vorrichtung nach Anspruch 5, **dadurch gekennzeichnet, dass** das Modul ferner einen Knopf (5₃) umfasst, der es erlaubt, das Starten des Editierens eines Besuchsberichts zu aktivieren, und einen Knopf (5₄), der es erlaubt, das Ende dieses Editierens zu befehlen.

7. Vorrichtung nach einem der Ansprüche 1 bis 6, **dadurch gekennzeichnet, dass** die Zentraleinheit (1) Mittel zum Aufzeichnen der Position des Fahrzeugs und einer Identifikation des Pharmaberaters umfasst, welchem das Fahrzeug zugewiesen ist, und Softwaremittel zum Suchen von zu besuchenden Ärzten in einem vorausbestimmten geographischen Umkreis, der von der Position des Fahrzeugs oder von einer anderen Position, die von dem Pharmaberater angegeben wird, abhängt.

8. Vorrichtung nach Anspruch 7, **dadurch gekennzeichnet, dass** die Softwaremittel zum Suchen von zu besuchenden Ärzten ferner Sortierfunktionen der zu besuchenden Ärzte in Abhängigkeit von einer Vielzahl von Kriterien ausführen, die aus der Gruppe ausgewählt werden, die Folgende umfasst:
- die Empfangstage und -uhrzeiten der Pharmaberater durch den Arzt,
- den Besuchsvorrang, der für den Arzt erstellt ist,
- die seit dem letzten Besuch des Arztes verstrichene Zeit,
- die von dem Pharmaberater zurückzulegende Entfernung, um den Arzt zu besuchen,
- die Existenz eines mit dem Arzt vereinbarten Termins,
- die Existenz eines bei dem Arzt laufenden Experiments,
- die Existenz einer Anfrage um Probenübergabe des Arztes.

9. Vorrichtung nach Anspruch 7 oder 8, **dadurch gekennzeichnet, dass** die Softwaremittel ferner Mittel zum Speichern und Übertragen von Informationen in Zusammenhang mit einem vorausbestimmten zu besuchenden Arzt umfassen.

10. Vorrichtung nach einem der Ansprüche 7 bis 9, **dadurch gekennzeichnet, dass** das elektronische Modul Mittel (5₃, 5₄, 7) umfasst, um einen Besuchsbericht sofort nach dem Ende des Besuchs zu editieren und zu übertragen.

11. Vorrichtung nach Anspruch 10, **dadurch gekennzeichnet, dass** die Mittel zum Editieren und Übertragen eines Besuchsberichts ferner Softwaremittel zum Unterstützen der Edition des Berichts umfassen, die in der Zentraleinheit (1) enthalten sind.

12. Elektronikmodul, das einem Teil der Vorrichtung gemäß einem der Ansprüche 1 bis 11 entspricht.
